# EUROPÄISCHE PATENTSCHRIFT

(11) **EP 3 396 350 B1**
(45) Veröffentlichungstag und Bekanntmachung des Hinweises auf die Patenterteilung: **01.01.2020**
(21) Anmeldenummer: 18165837.8
(22) Anmeldetag: 05.04.2018
(51) Int. Cl.: G01M 13/02, B60H 1/00, F24F 11/36, G01M 3/02, B60H 1/32, F25B 9/00, F25B 9/06

(54) **VERFAHREN ZUR BESTIMMUNG DER DICHTIGKEIT DES PROZESSLUFTKREISLAUFS EINER KALTLUFTKLIMAANLAGE**
METHOD FOR DETERMINING THE TIGHTNESS OF THE AIR CIRCULATION PROCESS OF A COLD AIR AIR CONDITIONING SYSTEM
PROCÉDÉ DE DÉTERMINATION DE L'ÉTANCHÉITÉ DU PROCESSUS DE CIRCULATION D'AIR D'UN SYSTÈME DE CLIMATISATION À AIR FROID

(30) Priorität: 25.04.2017 DE 102017004014
(43) Veröffentlichungstag der Anmeldung: 31.10.2018
(73) Patentinhaber: Liebherr-Transportation Systems GmbH & Co. KG, 2100 Korneuburg (AT)
(72) Erfinder: Frankenberger, Annekathrin, 1020 Wien (AT); Hörersdorfer, Stefan, 1160 Wien (AT); Krawanja, Andreas, 1160 Wien (AT)
(74) Vertreter: Laufhütte, Dieter

(56) Entgegenhaltungen:
- CN-B- 103 940 560
- DE-A1- 3 913 521

## Beschreibung

Die Erfindung betrifft Verfahren zur Bestimmung der Dichtigkeit des Prozessluftkreislaufs einer Kaltluftklimaanlage, ein System mit einer Kaltluftklimaanlage einer damit verbundenen Steuereinheit sowie ein Fahrzeug mit einem derartigen System.

Undichtigkeiten im Prozessluftkreislauf von Kaltluftklimaanlagen in Fahrzeugen wie beispielsweise Zügen führen zu einem Abfall der Kühlleistung. Bekannte Anlagen können den Wirkungsgradverlust bei Undichtigkeiten oftmals mit erhöhter Leistungsaufnahme kompensieren. Diese Tatsache erschwert die Diagnose einer Undichtigkeit, da spürbare Leistungseinbußen der Anlage erst dann auftreten, wenn das Limit der zu Verfügung stehenden elektrischen Leistung erreicht wird. Dies ist der Fall bei hohem Kühlleistungsbedarf. Bisher konnte die Dichtigkeit des Prozessluftkreislaufs einer im Fahrzeug eingebauten Kaltluftklimaanlage nur mittels Sichtprüfung überprüft werden. Dies ist bei einer bloßen Inspektion über Wartungsdeckel nicht möglich, was für eine Früherkennung ein Aufenthalt in der Werkstatt erforderlich machte.

Verfahren zur Erkennung von Undichtigkeiten in Prozessluftkreisläufen sind im Stand der Technik bekannt. Beispielsweise offenbart die DE 39 13 521 A1 ein gattungsgemäßes Verfahren, in welcher ein Prüfbetrieb durchgeführt wird, in welchem der Druck und die Temperatur des Prozessgases saugseitig des Kompressors gemessen und mit festen Sollwerten verglichen werden.

Aufgabe der Erfindung ist es, ein Verfahren zur frühzeitigen Erkennung von Undichtigkeiten im Prozessluftkreislauf bereitzustellen, das durchgeführt werden kann, während die Kaltluftklimaanlage im Fahrzeug eingebaut ist und sich im betriebsfähigen Zustand befindet. Bei der Überprüfung sollen keine Wartungsarbeiten notwendig sein und keine zusätzlichen Messinstrumente benötigt werden.

Vor diesem Hintergrund betrifft die Erfindung ein Verfahren zur Bestimmung der Dichtigkeit eines Prozessluftkreislaufs einer Kaltluftklimaanlage, wobei die Kaltluftklimaanlage eine Kühlturbine mit einem Kompressor und einer Expansionsturbine aufweist, die im Prozessluftkreislauf angeordnet ist, wobei ein Motor zum Betrieb des Kompressors vorgesehen ist und wobei Kompressor, Expansionsturbine und Motor über eine gemeinsame Welle verbunden sind. Das erfindungsgemäße Verfahren zeichnet sich dadurch aus, dass eine Kalibration durchgeführt wird, in dem mehrere Kennlinien einer Komponente der Kaltluftklimaanlage, welche Komponente in den drei alternativen Ausgestaltungen der Erfindung in den Ansprüchen 1-3 definiert ist, unter verschiedenen Rahmenbedingungen ermittelt werden, dass die ermittelten Kennlinien hinterlegt werden, und dass die hinterlegten Kennlinien in einem Prüflauf zur Feststellung der Dichtigkeit des Prozessluftkreislaufs herangezogen werden. Zum Zwecke der Durchführung des Verfahrens steht die Kaltluftklimaanlage mit einer Steuereinheit in Verbindung, auf der die ermittelten Kennlinien hinterlegt werden. Die Steuereinheit steht mit Sensoren in Verbindung, um im Rahmen der Kalibration die Kennlinien erfassen zu können und um im Klimabetrieb Messungen durchführen zu können, die eine Feststellung der Dichtigkeit unter Verwendung der hinterlegten Kennlinien zulassen. Der Prüflauf kann während des Klimabetriebs stattfinden. Er kann aber auch vor oder nach dem aktiven Klimabetrieb stattfinden.

Anhand des erfindungsgemäßen Verfahrens kann eine Undichtigkeit direkt nach dem Entstehen und noch vor dem Einsatz im Volllastbetrieb detektiert werden. Somit kann verhindert werden, dass es im Volllastbetrieb zu Leistungseinbußen und zu damit verbundenen Komforteinbußen im Fahrgastraum kommt. Der Betreiber kann aufgrund der sofortigen Erkennung von Undichtigkeiten je nach Anforderungen (Außentemperaturen, Passagierzahl) die Reparatur und Standzeit planen und somit Kosten einsparen.

Erfindungsgemäß ist vorgesehen, dass ein im Prüflauf bei gegebenen Rahmenbedingungen gemessener Betriebsparameter mit den zu den Rahmenbedingungen passenden Kennlinien verglichen wird. Beispielsweise kann, sofern bei einem Vergleich mit der Kennlinie eine Abweichung festgestellt wird, auf eine Undichtigkeit im Prozessluftkreislauf geschlossen werden. Die Größe der Abweichung lässt Rückschlüsse auf das Ausmaß der Undichtigkeit zu. Ferner kann die Kennlinie beispielweise einen Betriebsparameter mit bekannten Grade an Undichtigkeit in Verbindung setzen und es kann je nach dem, mit welcher Kennlinie der gemessene Betriebsparameter in Einklang steht, auf eine Undichtigkeit im Prozessluftkreislauf geschlossen werden.

Konkret werden bei der Kalibration mehrere Kennlinien mehrerer Komponenten der Kaltluftklimaanlage unter verschiedenen Rahmenbedingungen ermittelt und die Kennlinien zweier Komponenten werden im Prüflauf zur Ermittlung von momentanen Betriebsparametern der Komponenten herangezogen, die zur Feststellung der Dichtigkeit des Prozessluftkreislaufs verglichen werden. Eine Differenz lässt auf eine Undichtigkeit des Prozessluftkreislaufs schließen. Die Größe der Differenz lässt auf das Ausmaß der Undichtigkeiten schließen. So kann ebenfalls das Vorhandensein und das Ausmaß etwaiger Undichtigkeiten im Prozessluftkreislauf detektiert werden.

In einer Ausführungsform ist vorgesehen, dass die Kaltluftklimaanlage im offenen Unterdruckbetrieb betrieben wird. Im offenen Unterdruckbetrieb ist der Druck im Prozessluftkreislauf geringer als der Umgebungsdruck und der Kreislauf ist offen, d.h., die Prozessluft durchläuft den Kreislauf linear und wird nicht zirkuliert. Der offene Prozessluftkreislauf erstreckt sich, in Strömungsrichtung der Prozessluft, vorzugsweise von der Expansionsturbine bis zur Saugseite des Kompressors und durchläuft einen Lastwärmetauscher. Ferner sind vorzugsweise eine in die Expansionsturbine mündende Prozesslufteintrittsleitung und eine von der Druckseite des Kompressors abgehende Prozessluftaustrittsleitung vorgesehen.

Durch den im Vergleich zur Umgebung geringeren Luftdruck im Prozessluftkreislauf kann bei Vorliegen einer Undichtigkeit ungewollt Umgebungsluft in den Kreislauf eindringen, was dazu führt, dass bei gleicher Motorenleistung eine geringere Kälteleistung erreicht wird, dass sich also der Wirkungsgrad verschlechtert. Die Kälteleistung wird durch den Kompressor erbracht, genauer gesagt durch den Motor, der den Kompressor betreibt. Der Kompressor saugt Luft aus dem Prozessluftkreislauf und führt so den Unterdruck herbei. Im Prüflauf und auch während der Kalibration wird aufgrund der Druckdifferenz zwischen der Umgebung und dem Prozessluftkreislauf Umgebungsluft durch die Prozesslufteintrittsleitung in den Prozessluftkreislauf angesaugt und durchläuft dabei die Expansionsturbine. Die im Rahmen der adiabatischen Expansion gekühlte Luft durchläuft dann einen Lastwärmetauscher. Am Kompressor wird die aus dem Prozessluftkreislauf angesaugte Luft dann auf Umgebungsdruck komprimiert und wieder an die Umgebung abgegeben.

In einer alternativen Ausführungsform ist vorgesehen, dass die Kaltluftklimaanlage im offenen Überdruckbetrieb betrieben wird. Im offenen Überdruckbetrieb ist der Druck im Prozessluftkreislauf höher als der Umgebungsdruck. Der Prozessluftkreislauf ist aber wie beim offenen Unterdruckbetrieb ebenfalls offen, d.h., die Prozessluft durchläuft den Kreislauf linear und wird nicht zirkuliert. Der offene Prozessluftkreislauf erstreckt sich, in Strömungsrichtung der Prozessluft, vorzugsweise von der Druckseite des Kompressors bis zur Expansionsturbine und durchläuft einen Außenluftwärmetauscher, an dem Wärme aus der Prozessluft abgezogen wird. Ferner sind vorzugsweise eine in den Kompressor mündende Prozesslufteintrittsleitung und eine von der Expansionsturbine abgehende Prozessluftaustrittsleitung vorgesehen. Die Prozessluft wird dann direkt in die Fahrzeugkabine eingeleitet, die Kühlung der Fahrzeugkabine erfolgt also im Gegensatz zum offenen Unterdruckprozess direkt über die Prozessluft und nicht indirekt über einen Lastwärmetauscher. Durch den im Vergleich zur Umgebung höheren Luftdruck im Prozessluftkreislauf kann bei Vorliegen einer Undichtigkeit ungewollt Prozessluft aus dem Kreislauf austreten, was dazu führt, dass bei gleicher Motorenleistung eine geringere Kälteleistung erreicht wird, dass sich also der Wirkungsgrad verschlechtert. Die Kälteleistung wird durch den Kompressor erbracht, genauer gesagt durch den Motor, der den Kompressor betreibt. Der Kompressor drückt Luft in den Prozessluftkreislauf und führt so den Überdruck herbei. Im Prüflauf und auch während der Kalibration wird aufgrund der Druckdifferenz zwischen der Umgebung und dem Prozessluftkreislauf Umgebungsluft vom Kompressor durch die Prozesslufteintrittsleitung gesaugt und in den Prozessluftkreislauf gedrückt. Die im Rahmen der adiabatischen Kompression erwärmte Luft durchläuft dann einen Außenwärmetauscher und wird dabei abgekühlt. An der Expansionsturbine wird die Luft dann adiabatisch wieder auf Umgebungsdruck oder, falls abweichend, Kabinendruck expandiert und dabei unter die Temperatur der Umgebungsluft abgekühlt. Sie kann dann direkt an die Fahrzeugkabine abgegeben werden.

Wird die Kaltluftklimaanlage im offenen Unterdruckbetrieb oder im offenen Überdruckbetrieb betrieben, so ist in einer Ausführungsform vorgesehen, dass bei der Kalibration mehrere Kennlinien der Leistungsaufnahme des Motors in Abhängigkeit der Drehzahl des Kompressors ermittelt werden, vorzugsweise unter Vorlage unterschiedlicher Umgebungstemperaturen und Umgebungsdrücke als Rahmenbedingungen, und dass im Prüflauf zur Feststellung der Dichtigkeit die momentane Leistungsaufnahme des Motors bei gegebener Drehzahl des Kompressors und gegebenen Rahmenbedingungen mit der zu den Rahmenbedingungen passenden Kennlinie verglichen wird. Die Leistungsaufnahme des Kompressors ist bei konstanter Drehzahl hauptsächlich von der Umgebungstemperatur und dem Umgebungsdruck abhängig, während der Einfluss von Kälteleistung und Umgebungsfeuchte vernachlässigt werden kann. Es können also in einer Ausführungsform ausschließlich unterschiedliche Umgebungstemperaturen und Umgebungsdrücke als Rahmenbedingungen vorgelegt werden. Bei dieser Ausführungsform handelt es sich um ein Beispiel eines Prozesses, in dem ein im Prüflauf bei gegebenen Rahmenbedingungen gemessener Betriebsparameter, hier die Leistungsaufnahme des Motors, mit der zu den Rahmenbedingungen passenden Kennlinie verglichen wird. Sofern bei dem genannten Vergleich eine Abweichung festgestellt wird, kann auf eine Undichtigkeit im Prozessluftkreislauf geschlossen werden. Die Größe der Abweichung lässt Rückschlüsse auf das Ausmaß der Undichtigkeit zu.

In einer alternativen Ausführungsform kann bei Betrieb der Kaltluftklimaanlage im offenen Unterdruckbetrieb oder im offenen Überdruckbetrieb vorgesehen sein, dass bei der Kalibration mehrere Kennlinien des Massestroms durch den Kompressor und mehrere Kennlinien des Massestroms durch die Expansionsturbine in Abhängigkeit der Druckdifferenz ermittelt werden, vorzugsweise unter Vorlage unterschiedlicher Temperaturen als Rahmenbedingungen, und dass im Prüflauf zur Feststellung der Dichtigkeit die Masseströme durch den Kompressor und die Expansionsturbine bei gegebener Druckdifferenz und gegebenen Rahmenbedingungen ermittelt und miteinander verglichen werden. In einer Ausführungsform können ausschließlich unterschiedliche Temperaturen als Rahmenbedingungen vorgelegt werden, wobei hierfür die Umgebungstemperaturen und die Temperaturen innerhalb des Prozessluftkreislaufs vor und nach dem Lastwärmetauscher in Frage kommen. Es werden also anhand der hinterlegten Strömungskennlinien die Masseströme durch die Expansionsturbine und den Kompressor bei gegebenen Rahmenbedingungen ermittelt. Diese Masseströme werden dann verglichen. Hierbei handelt es sich um ein Beispiel, wobei bei der Kalibration Kennlinien mehrerer Komponenten der Kaltluftklimaanlage, also des Massestroms durch den Kompressor und die Expansionsturbine, unter verschiedenen Rahmenbedingungen ermittelt werden und dass die Kennlinien der zwei Komponenten im Prüflauf zur Ermittlung von momentanen Betriebsparametern der Komponenten herangezogen werden, die zur Feststellung der Dichtigkeit des Prozessluftkreislaufs verglichen werden. Eine Differenz lässt auf eine Undichtigkeit des Prozessluftkreislaufs schließen. Die Größe der Differenz lässt auf das Ausmaß der Undichtigkeiten schließen. So kann ebenfalls das Vorhandensein und das Ausmaß etwaiger Undichtigkeiten im Prozessluftkreislauf detektiert werden.

Die benötigten Werte für Umgebungstemperatur und Umgebungsdruck können anhand von Sensoren ermittelt werden, die an der Kaltluftklimaanlage angebracht sind. Es kann aber ebenso auch auf Werte zurückgegriffen werden, die an anderer Stelle eines Fahrzeugs gemessen oder gar von einer außerhalb des Fahrzeugs befindlichen Sendestelle abgefragt werden.

In einer wiederum anderen Ausführungsform der Erfindung ist vorgesehen, dass die Kaltluftklimaanlage im geschlossenen Überdruckbetrieb betrieben wird und eine Zapfleitung mit einem Vorkompressor aufweist. Im geschlossenen Überdruckbetrieb ist der Druck im Prozessluftkreislauf höher als der Umgebungsdruck und der Kreislauf ist geschlossen, d.h., die Prozessluft wird zirkuliert. Der Prozessluftkreislauf weist zwei Abschnitte auf, nämlich einen Hochdruckabschnitt und einen Niedrigdruckabschnitt, wobei der Druck auch im Niedrigdruckabschnitt höher als der Umgebungsdruck ist. Der Niedrigdruckabschnitt erstreckt sich von der Expansionsturbine bis zur Saugseite des Kompressors und durchläuft einen Lastwärmetauscher. Der Hochdruckabschnitt erstreckt sich von der Druckseite des Kompressors bis zur Expansionsturbine und durchläuft einen Außenwärmetauscher. Durch den im Vergleich zur Umgebung höheren Luftdruck im Prozessluftkreislauf kann bei Vorliegen einer Undichtigkeit ungewollt Prozessluft aus dem Kreislauf entweichen, was dazu führt, dass bei gleicher Arbeit des Vorkompressors weniger Wärme am Lastwärmetauscher aufgenommen wird, dass sich also der Wirkungsgrad verschlechtert. Die Kälteleistung wird durch den Kompressor und den Vorkompressor erbracht. Im Prüflauf und auch während der Kalibration wird saugt der Vorkompressor Umgebungsluft an, komprimiert diese Luft und füllt den Niedrigdruckabschnitt. Der Kompressor saugt komprimierte Luft aus dem Niedrigdruckabschnitt an, komprimiert diese zusätzlich und füllt den Hochdruckabschnitt. Im Hochdruckabschnitt durchläuft die im Rahmen der adiabatischen Kompression erwärmte Luft einen Lastwärmetauscher und wird dann aufgrund der Druckdifferenz zwischen dem Hochdruckabschnitt und dem Niedrigdruckabschnitt unter Durchlaufen der Expansionsturbine wieder in den Niedrigdruckabschnitt gesaugt. Die im Außenwärmetauscher vorgekühlte und im Rahmen der adiabatischen Expansion an der Expansionsturbine weiter gekühlte Luft durchläuft dann einen Lastwärmetauscher. Die Luft wird dann im Niedrigdruckabschnitt wieder zur Saugseite des Kompressors zirkuliert, sodass sich ein geschlossener Kreislauf bildet. Der Vorkompressor saugt bei Bedarf weitere Luft über die Zapfleitung an.

Wird die Kaltluftklimaanlage im geschlossenen Überdruckbetrieb betrieben, so ist erfindungsgemäß vorgesehen, dass bei der Kalibration mehrere Kennlinien für die relative Einschaltdauer des Vorkompressors oder die Betriebszeit des Vorkompressors beim Füllen des Prozessluftkreislaufs in Abhängigkeit bekannter Undichtigkeiten ermittelt werden, vorzugsweise mit unterschiedlichen Umgebungsdrücken als Rahmenbedingungen, und dass im Prüflauf zur Feststellung der Dichtigkeit die relative Einschaltdauer des Vorkompressors oder die Betriebszeit des Vorkompressors beim Füllen des Prozessluftkreislaufs bei gegebenen Rahmenbedingungen mit dem zu den Rahmenbedingungen passenden hinterlegten Wert verglichen wird. Sofern bei dem Vergleich eine Abweichung festgestellt wird, kann auf eine Undichtigkeit im Prozessluftkreislauf geschlossen werden. Die Größe der Abweichung lässt Rückschlüsse auf das Ausmaß der Undichtigkeit zu. In einer Ausführungsform werden ausschließlich unterschiedliche Umgebungsdrücke als Rahmenbedingungen vorgelegt. Hier wird angenommen, dass der Vorkompressor lediglich mit einer einzigen Leistungsstufe betrieben werden kann. Sofern ein variabler Kompressor vorgesehen ist, muss die Leistung des Kompressors ebenfalls als Rahmenbedingung berücksichtigt werden. Hierbei handelt es sich um ein Beispiel eines Prozesses, in dem ein im Prüflauf bei gegebenen Rahmenbedingungen gemessener Betriebsparameter, hier die relative Einschaltdauer des Vorkompressors oder die Betriebszeit des Vorkompressors beim Füllen des Prozessluftkreislaufs, mit mehreren zu den Rahmenbedingungen passenden Kennlinien verglichen wird. Je nach dem, mit welcher Kennlinie der gemessene Betriebsparameter in Einklang steht, kann auf eine Undichtigkeit im Prozessluftkreislauf geschlossen werden.

Vor dem eingangs genannten Hintergrund betrifft die Erfindung ferner ein System umfassend eine Kaltluftklimaanlage sowie eine damit in Verbindung stehende Steuereinheit, die ausgebildet ist, ein erfindungsgemäßes Verfahren zur Erkennung von Undichtigkeiten auszuführen. Die Kaltluftklimaanlage umfasst einen Kompressor und eine Expansionsturbine, die im Prozessluftkreislauf angeordnet sind, wobei ein Motor zum Betrieb des Kompressors vorgesehen ist, wobei Kompressor, Expansionsturbine und Motor über eine gemeinsame Welle verbunden sind und wobei die Kaltluftklimaanlage für den offenen Unterdruckbetrieb, den offenen Überdruckbetrieb oder den geschlossenen Überdruckbetrieb ausgelegt ist.

Die Steuereinheit kann ausgebildet sein, eine Kalibration durchzuführen und die Daten zu ermitteln und zu speichern. Die Steuereinheit kann ausgebildet sein, die Kalibration automatisch oder auf Benutzerbefehl zu starten. Ferner kann die Steuereinheit ausgebildet sein, die Dichtigkeit im Prüflauf automatisch zu festgelegten Zeitpunkten oder nach Ablauf einer bestimmten Periode durchzuführen. Alternativ oder zusätzlich kann die Steuereinheit ausgebildet sein, die Dichtigkeit im Prüflauf auf Benutzerbefehl zu überprüfen.

Ferner betrifft die Erfindung ein Fahrzeug mit einem erfindungsgemäßen System. Bei dem Fahrzeug kann es sich beispielsweise um ein Landfahrzeug, vorzugsweise einen Zug, ein Luftfahrzeug, vorzugsweise ein Flugzeug, oder ein Wasserfahrzeug, vorzugsweise ein Schiff handeln.

Es ist an dieser Stelle anzumerken, dass das erfindungsgemäße Verfahren zur Dichtigkeitsbestimmung nicht nur im Rahmen eines Kühlbetriebs der Kaltluftklimaanlage angewendet werden kann, sondern auch im Rahmen eines Heizbetriebes derselben. Denn auch im Heizbetrieb herrscht in den Prozessluftkreisläufen entweder Überdruck oder Unterdruck und die Kennlinien lassen sich in identischer Weise bestimmen. Auf der Vorrichtungsseite weisen Kaltluftklimaanlagen, die im Kühlbetrieb und im Heizbetrieb gefahren werden können, zusätzliche Ventile und Leitungen zum Umschalten zwischen Kühl- und Heizbetrieb innerhalb des Prozessluftkreislaufs auf.

Weitere Einzelheiten und Vorteile der Erfindung ergeben sich aus den nachfolgend anhand der Figuren beschriebenen Ausführungsbeispielen. In den Figuren zeigen:
- Figur 1:: schematische Darstellungen mehrerer für den offenen Unterdruckbetrieb und die Durchführung eines erfindungsgemäßen Verfahrens ausgelegten Kaltluftklimaanlagen;
- Figur 2:: schematische Darstellungen mehrerer für die offenen Überdruckbetrieb und die Durchführung eines erfindungsgemäßen Verfahrens ausgelegten Kaltluftklimaanlage; und
- Figur 3:: eine schematische Darstellung einer für den geschlossenen Überdruckbetrieb und die Durchführung eines erfindungsgemäßen Verfahrens ausgelegten Kaltluftklimaanlage.

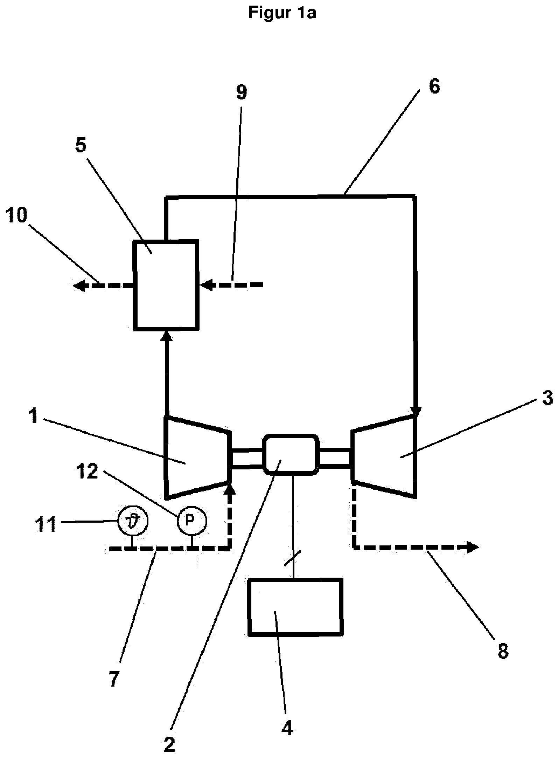

Figuren 1a-1d zeigen beispielhafte Systemanordnungen für die Durchführung eines erfindungsgemäßen Verfahrens an einer Kaltluftklimaanlage, die für den offenen Unterdruckbetrieb ausgelegt ist.

Das Kernstück der Kaltluftklimaanlagen in allen Anordnungen gemäß Figuren 1a-1d bildet die Kühlturbine umfassend eine Expansionsturbine 1, einen mit dieser Expansionsturbine 1 auf einer gemeinsamen Welle angeordneten Kompressor 3 und ein zwischen Expansionsturbine 1 und Kompressor 3 an der Welle angeordneter Motor 2. Der Motor 2 steht mit einer Antriebseinheit 4 in Verbindung. Der Prozessluftkreislauf 6 der Kaltluftklimaanlage erstreckt sich, in Strömungsrichtung der Prozessluft, von der Expansionsturbine 1 zum Kompressor 3 und durchläuft die kalte Seite des Lastwärmetauschers 5 für eine Wärmeaufnahme aus dem Fahrgastraum. Die Klimaluftleitungen 9 und 10 führen die Luft des Fahrgastraums durch die warme Seite des Wärmetauschers 5.

Die Kaltluftklimaanlagen gemäß Figuren 1a-1d ist für den Unterdruckbetrieb ausgelegt und im Prozessluftkreislauf 6 herrscht im Betrieb ein Druck, der geringer ist als der Umgebungsdruck. Der Prozessluftkreislauf 6 beginnt an der Expansionsturbine 1 und endet am Kompressor 3. Die Zufuhr von Luft an die Expansionsturbine 1 und in den Prozessluftkreislauf 6 erfolgt im Betrieb durch eine Prozesslufteintrittsleitung 7. Aufgrund des im Prozessluftkreislauf 6 herrschenden Unterdrucks wird Umgebungsluft durch die Prozesslufteintrittsleitung 7 angesaugt. An der Expansionsturbine 1 wird dieser angesaugte Luftstrom gedrosselt. Die im Rahmen dieser Drosselung aufgenommene Energie wird zumindest teilweise in ein Drehmoment umgewandelt, das dann über die Welle an den Kompressor 3 weitergegeben wird, wodurch der Motor 2 in seinem Betrieb des Kompressors 3 unterstützt wird. Der Kompressor 3 wird aktiv durch den Motor 2 und zusätzlich durch das Drehmoment der Expansionsturbine 1 betrieben. Er ist für die Expansion der Luft an der Expansionsturbine 1 bzw. für die Erzeugung des Unterdrucks im Prozessluftkreislauf 6 verantwortlich. Die im Prozessluftkreislauf 6 befindliche, expandierte Luft wird vom Kompressor 3 angesaugt, am Kompressor 3 komprimiert und sodann durch die Prozessluftaustrittsleitung 8 wieder an die Umgebung abgegeben. Durch die Expansion der Luft an der Expansionsturbine 1 sinkt die Temperatur, sodass die Luft im Prozessluftkreislauf 6 eine geringere Temperatur hat als die Umgebungsluft und der Luft des Fahrgastraums am Lastwärmetauscher 5 Wärme entziehen kann.

Die Kaltluftklimaanlagen der Figuren 1a-1d sind jeweils mit unterschiedlichen Sets an Temperatur- und Drucksensoren ausgestattet, um unterschiedliche Varianten der Dichtigkeitsmessung der vorliegenden Erfindung zu realisieren.

In der Ausführungsform gemäß Figur 1a sind ein Temperatursensor 11 und ein Drucksensor 12 an der Prozesslufteintrittsleitung 7 vorgesehen, um Temperatur und Druck der zugeführten Luft, mithin also Umgebungslufttemperatur und Umgebungsluftdruck zu messen.
Zur Feststellung etwaiger Undichtigkeiten im Prozessluftkreislauf 6 ist in dieser Ausführungsform vorgesehen, dass in einer Kalibrationsroutine die Kennlinien der Leistungsaufnahme (P) des Motors 2 in Abhängigkeit der Drehzahl (*n*) bei unterschiedlichen Umgebungstemperaturen und -drücken gemessen werden. Die Umgebungstemperaturen und -drücke werden dabei von den Sensoren 11 und 12 erfasst. Die Leistungsaufnahme des Motors 2 wird am Antrieb 4 standardmäßig erfasst. Die Leistungsaufnahme (P) ist bei konstanter Drehzahl hauptsächlich von der Umgebungstemperatur und dem Umgebungsdruck abhängig, während der Einfluss von Kälteleistung und Umgebungsfeuchte vernachlässigt werden kann. Die so ermittelten Leistungskennlinien P(*n*) für unterschiedliche Umgebungstemperaturen und -drücke werden in der Steuereinheit hinterlegt. Im Prüflauf kann die gemessene Leistungsaufnahme des Motors 2 bei der momentanen Drehzahl und bei gegebenen Werten für Umgebungstemperatur und - druck mit der passenden Leistungskennlinie verglichen werden. Sofern eine Abweichung festgestellt wird, kann auf eine Undichtigkeit im Prozessluftkreislauf 6 geschlossen werden. Die Größe der Abweichung lässt Rückschlüsse auf das Ausmaß der Undichtigkeit zu.

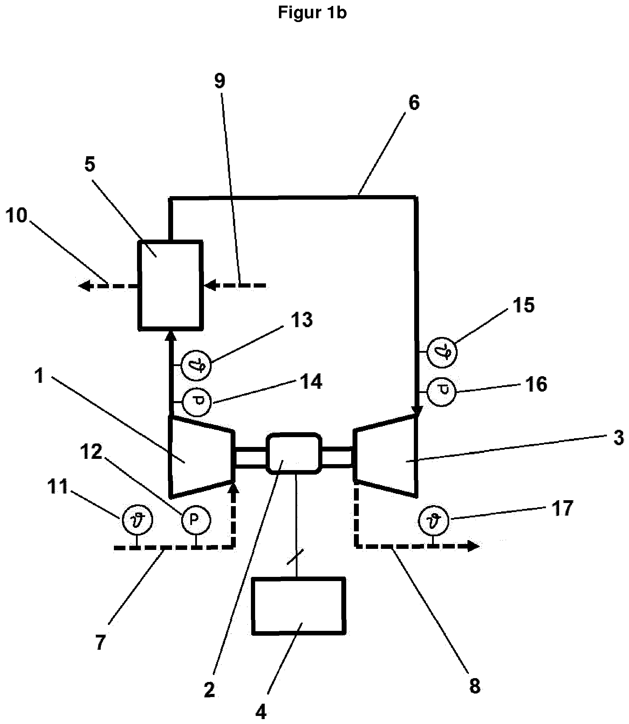

In der Ausführungsform gemäß Figur 1b sind neben den Sensoren 11 und 12 noch weitere Sensoren vorhanden, nämlich ein Paar an Temperatur- und Drucksensoren 13 und 14 im Prozessluftkreislauf 6 stromaufwärts des Wärmetauschers 5, ein Paar an Temperatur- und Drucksensoren 15 und 16 im Prozessluftkreislauf 6 stromabwärts des Wärmetauschers 5, und ein einzelner Temperatursensor 17 in der Prozessluftaustrittsleitung 8.

Zur Erkennung von Undichtigkeiten im Prozessluftkreislauf 6 ist in dieser Ausführungsform vorgesehen, dass in einer Kalibrationsroutine die Kennlinien des Massestroms (qₘ) durch die Expansionsturbine 1 und den Kompressor 3 in Abhängigkeit von Druckerhöhung bzw. -abfall (Δp) bei unterschiedlichen Temperaturen bestimmt werden. Zur Bestimmung dieser Masseströme müssen bei bekannten Drehzahlen die Temperaturen und Drücke vor und nach den jeweiligen Bauteilen, also vor und nach Expansionsturbine 1 und Kompressor 3 ermittelt werden. Dies erfolgt anhand der Sensoren 11-17, wobei ein Drucksensor in der Prozessluftaustrittsleitung 8 deshalb entbehrlich ist, da der dortige Druck dem bereits von Sensor 12 ermittelten Umgebungsdruck entspricht. Die so ermittelten Strömungskennlinien qₘ(Δp) werden in der Steuereinheit hinterlegt. Im Prüflauf können nun die Druckerhöhung bzw. -abfall an Expansionsturbine 1 und Kompressor 3 sowie die Temperaturen bestimmt werden. Anhand der hinterlegten Strömungskennlinien qₘ(Δp) werden für diese Rahmenbedingungen die Masseströme durch die Expansionsturbine 1 und den Kompressor 3 ermittelt. Eine Differenz lässt auf eine Undichtigkeit schließen. So kann ebenfalls das Vorhandensein und das Ausmaß etwaiger Undichtigkeiten im Prozessluftkreislauf 6 detektiert werden.

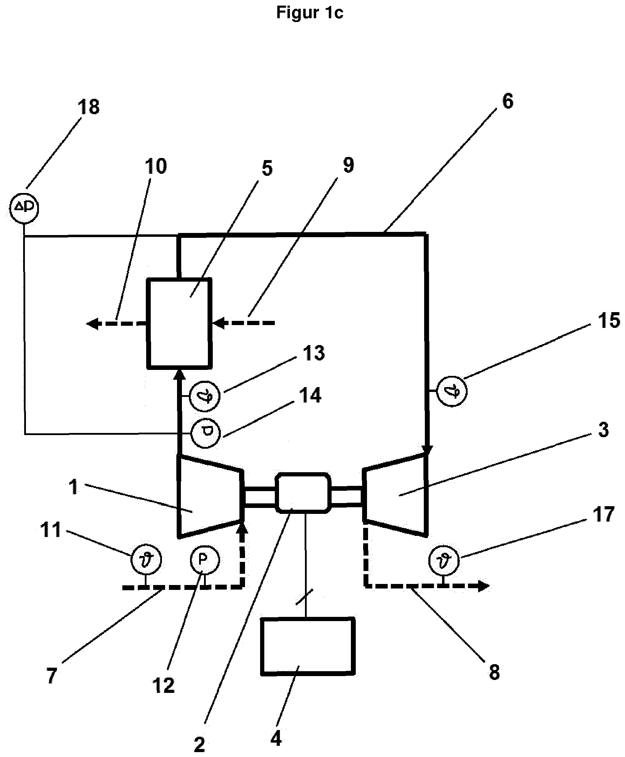

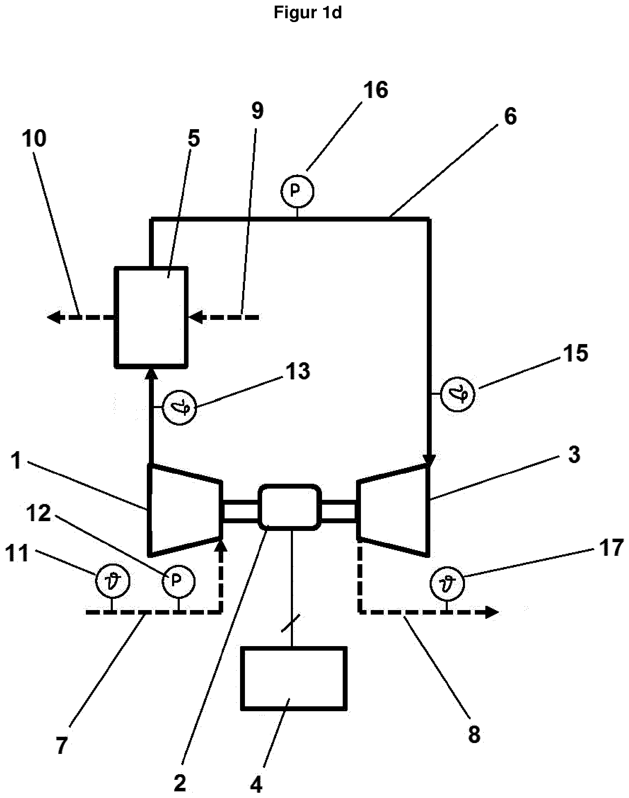

Figuren 1c und 1d zeigen vereinfachte Varianten der Ausführungsform gemäß Figur 1b, an denen ebenfalls eine Dichtigkeitsmessung durch Vergleich der Masseströme durchgeführt werden kann.

Die Ausführungsform gemäß Figur 1c unterscheidet sich von der Ausführungsform gemäß Figur 1b lediglich dadurch, dass an Stelle des Absolutdrucksensors 16 im Prozessluftkreislauf 6 stromabwärts des Wärmetauschers 5 ein Differenzdrucksensor 18 vorgesehen ist, der den Druckabfall am Wärmetauscher 5 misst. Ein derartiger Differenzdrucksensor 18 ist in gattungsgemäßen Klimaanlagen häufig ohnehin vorhanden, um eine Vereisung des Wärmetauschers erkennen zu können. Anhand des Differenzdrucksensors 18 kann bei bekanntem Absolutdruck stromauf des Wärmetauschers 5 (Sensor 14) auch der Absolutdruck stromab des Wärmetauschers 5 bestimmt werden.

Die Ausführungsform gemäß Figur 1d unterscheidet sich von der Ausführungsform gemäß Figur 1b lediglich dadurch, dass der Drucksensor 14 stromauf des Wärmetauschers 5 fehlt. Da der Druckabfall am Wärmetauscher 5 normalerweise wesentlich geringer ist als der Druckabfall an Expansionsturbine 1 und Verdichter 3 können auch dann zuverlässige Ergebnisse erzielt werden, wenn im Prozessluftkreislauf 6 der Druck nur einmal gemessen und sowohl für die Modellierung des Massestroms an der Expansionsturbine 1 als auch für die Modellierung des Massestroms am Kompressor 3 verwendet wird.

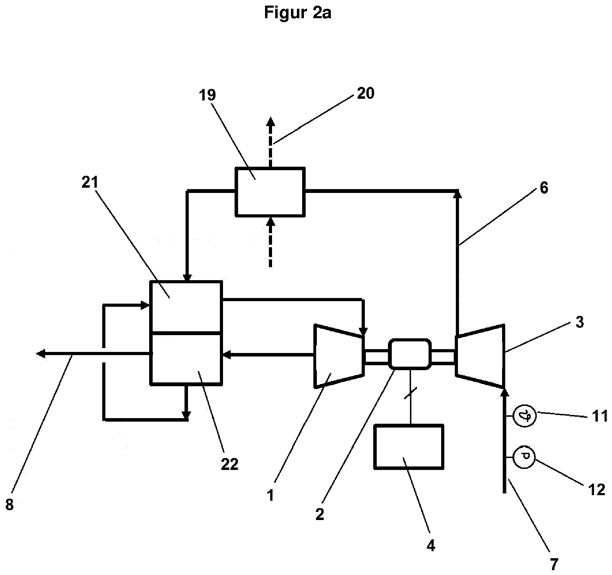

Figuren 2a-2c zeigen beispielhafte Systemanordnungen für die Durchführung eines erfindungsgemäßen Verfahrens an einer Kaltluftklimaanlage, die für den offenen Überdruckbetrieb ausgelegt ist.

Das Kernstück der Kaltluftklimaanlagen in allen Anordnungen gemäß Figuren 2a-2c bildet wiederum eine Kühlturbine mit einer Expansionsturbine 1, einem mit dieser Expansionsturbine 1 auf einer gemeinsamen Welle angeordneten Kompressor 3 und einem zwischen Expansionsturbine 1 und Kompressor 3 an der Welle angeordneten Motor 2. Wiederum steht der Motor 2 mit einer Antriebseinheit 4 in Verbindung.

Im Unterschied zu den Anordnungen gemäß Figuren 1a-1d ist die Prozesslufteintrittsleitung 7 aber in dieser Ausführungsform mit dem Kompressor 3 verbunden und der Prozessluftkreislauf 6 erstreckt sich, in Strömungsrichtung der Prozessluft, vom Kompressor 3 zur Expansionsturbine 1. Im Prozessluftkreislauf befindet sich hier kein Lastwärmetauscher sondern ein Außenluftwärmetauscher 19. Der Außenluftstrom ist symbolisch dargestellt und mit dem Bezugszeichen 20 gekennzeichnet. Durch die Komprimierung am Kompressor 3 hat die Prozessluft im Prozessluftkreislauf 6 eine Temperatur, die oberhalb der Umgebungstemperatur liegt. Daher kann am Außenluftwärmetauscher 19 eine Kühlung der Prozessluft erfolgen. Nach dem Außenluftwärmetauscher 19 durchläuft die Prozessluft im Prozessluftkreislauf 6 in Serie zunächst die warme Seite eines Wiedererhitzers 21, dann einen Kondensator 22 und zuletzt die kalte Seite des Wiedererhitzers 21, bevor sie durch die Expansionsturbine 1 in die Prozessluftaustrittsleitung 8 expandiert wird. Die Temperatur der Prozessluft in der Prozessluftaustrittsleitung 8 ist durch die Wärmeabfuhr am Außenluftwärmetauscher 19 geringer als die Umgebungstemperatur. Die Prozessluftaustrittsleitung 8 durchläuft die kalte Seite des Kondensators 22 und wird dann direkt in die Fahrzeugkabine eingeleitet.

In der Ausführungsform gemäß Figur 2a sind, wie auch in der Ausführungsform gemäß Figur 1a, ein Temperatursensor 11 und ein Drucksensor 12 an der Prozesslufteintrittsleitung 7 vorgesehen, um Temperatur und Druck der zugeführten Luft, mithin also Umgebungslufttemperatur und Umgebungsluftdruck zu messen.

Analog der Ausführungsform gemäß Figur 1a ist auch hier zur Feststellung etwaiger Undichtigkeiten im Prozessluftkreislauf 6 vorgesehen, dass in einer Kalibrationsroutine die Kennlinien der Leistungsaufnahme (P) des Motors 2 in Abhängigkeit der Drehzahl (n) bei unterschiedlichen Umgebungstemperaturen und -drücken gemessen werden, wobei die Umgebungstemperaturen und -drücke von den Sensoren 11 und 12 erfasst werden und die Leistungsaufnahme des Motors 2 am Antrieb 4 standardmäßig erfasst wird. In ähnlicher Weise können so wiederum Leistungskennlinien P(n) für unterschiedliche Umgebungstemperaturen und -drücke ermittelt und in der Steuereinheit hinterlegt werden. Im Prüflauf kann die gemessene Leistungsaufnahme des Motors 2 bei der momentanen Drehzahl und bei gegebenen Werten für Umgebungstemperatur und -druck mit der passenden Leistungskennlinie verglichen werden. Sofern eine Abweichung festgestellt wird, kann auf eine Undichtigkeit im Prozessluftkreislauf 6 geschlossen werden. Die Größe der Abweichung lässt Rückschlüsse auf das Ausmaß der Undichtigkeit zu.

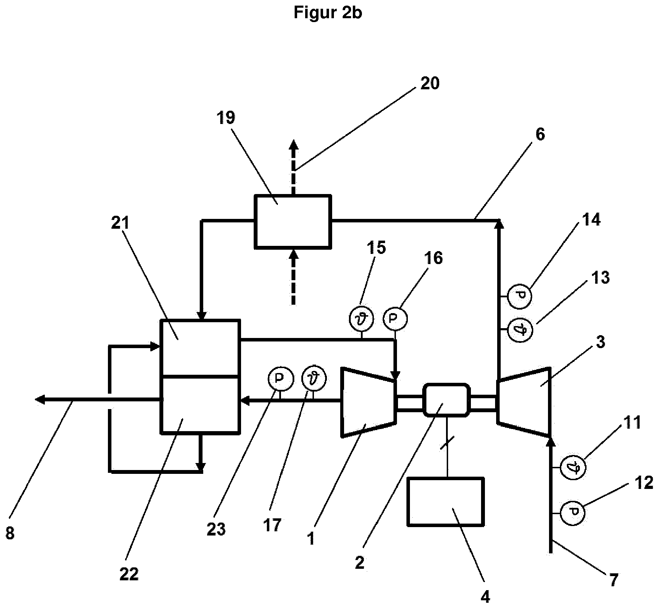

In der Ausführungsform gemäß Figur 2b sind neben den Sensoren 11 und 12 noch weitere Sensoren vorhanden, nämlich ein Paar an Temperatur- und Drucksensoren 13 und 14 im Prozessluftkreislauf 6 stromaufwärts des Außenluftwärmetauschers 19, ein Paar an Temperatur- und Drucksensoren 15 und 16 im Prozessluftkreislauf 6 stromabwärts der kalten Seite des Wiedererhitzers 21, und ein Paar an Temperatur- und Drucksensoren 17 und 23 in der Prozessluftaustrittsleitung 8 stromaufwärts der kalten Seite des Kondensators 22.

Zur Erkennung von Undichtigkeiten im Prozessluftkreislauf 6 ist in dieser Ausführungsform ähnlich der Ausführungsformen gemäß Figuren 1b-1d vorgesehen, dass in einer Kalibrationsroutine die Kennlinien des Massestroms (qₘ) durch die Expansionsturbine 1 und den Kompressor 3 in Abhängigkeit von Druckerhöhung bzw. -abfall (Δp) bei unterschiedlichen Temperaturen bestimmt werden. Die Bestimmung dieser Masseströme erfolgt unter Verwendung der Sensoren 11-17 und 23. Der Sensor 23 ist hier gegenüber den Ausführungsformen gemäß Figuren 1b-1d nicht entbehrlich, da der Kabinendruck nicht dem Außendruck entsprechen muss und es zudem am Kondensator 22 noch einen Druckabfall geben kann. Wie gehabt werden die ermittelten Strömungskennlinien qₘ(Δp) werden in der Steuereinheit hinterlegt und in einem Prüflauf können die Druckerhöhung bzw. -abfall an Expansionsturbine 1 und Kompressor 3 sowie die Temperaturen bestimmt werden. Anhand der hinterlegten Strömungskennlinien qₘ(Δp) werden für diese Rahmenbedingungen die Masseströme durch die Expansionsturbine 1 und den Kompressor 3 ermittelt. Eine Differenz lässt auf eine Undichtigkeit schließen.

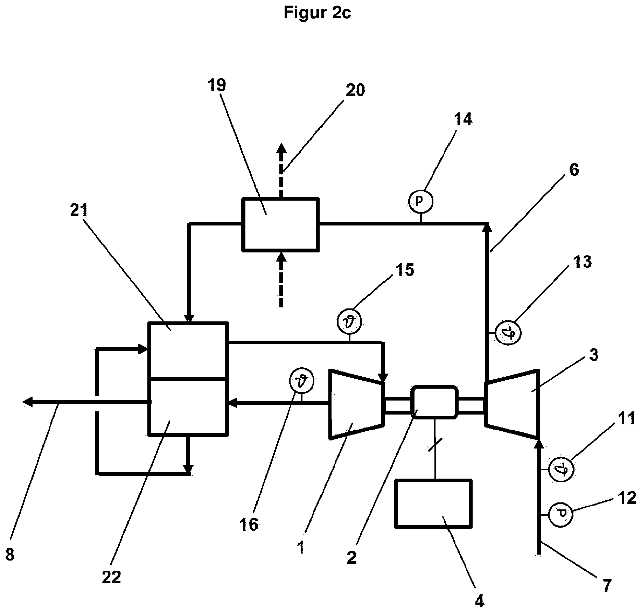

Figur 2c zeigt eine vereinfachte Variante der Ausführungsform gemäß Figur 2b, an der ebenfalls eine Dichtigkeitsmessung durch Vergleich der Masseströme durchgeführt werden kann.

Die Ausführungsform gemäß Figur 2c unterscheidet sich von der Ausführungsform gemäß Figur 2b dadurch, dass der Drucksensor 16 stromab der kalten Seite des Wiedererhitzers 21 sowie der Drucksensor 23 stromab der kalten Seite des Kondensators 22 fehlen. Da der kumulative Druckabfall am Außenluftwärmetauscher 19, an warmer und kalter Seite des Wiedererhitzers 21 und im Kondensator 22 normalerweise wesentlich geringer ist als der Druckabfall an Expansionsturbine 1 und Verdichter 3 können auch dann zuverlässige Ergebnisse erzielt werden, wenn im Prozessluftkreislauf 6 der Druck nur einmal gemessen und sowohl für die Modellierung des Massestroms an der Expansionsturbine 1 als auch für die Modellierung des Massestroms am Kompressor 3 verwendet wird. Ferner kann dann, wenn der Kabinendruck dem Umgebungsdruck entspricht, aufgrund analoger Überlegungen zum Druckabfall an der kalten Seite des Kondensators 22 auf den zusätzlichen Drucksensor 23 verzichtet werden.

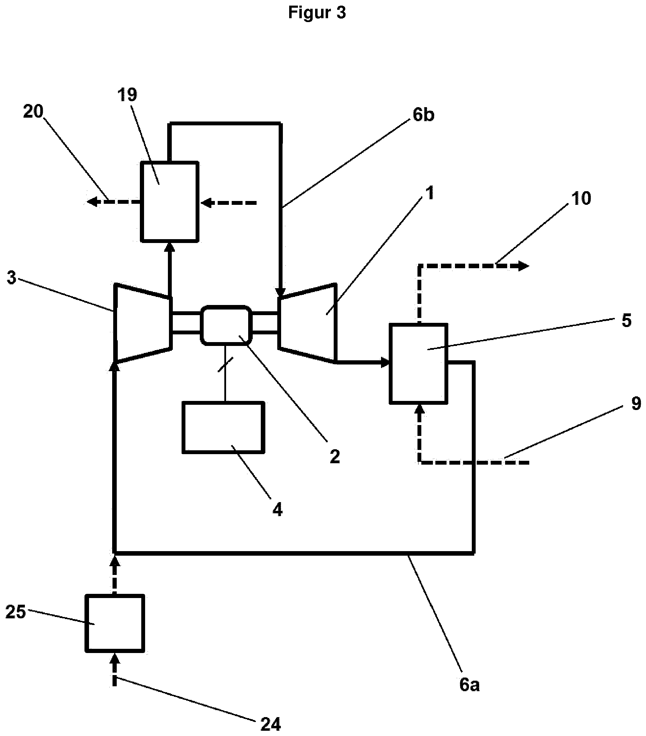

Figur 3 zeigt eine beispielhafte Systemanordnung für die Durchführung eines erfindungsgemäßen Verfahrens an einer Kaltluftklimaanlage, die für den geschlossenen Überdruckbetrieb ausgelegt ist.

Das Kernstück auch dieser Kaltluftklimaanlage bildet wiederum eine Kühlturbine mit einer Expansionsturbine 1, einem mit dieser Expansionsturbine 1 auf einer gemeinsamen Welle angeordneten Kompressor 3 und einem zwischen Expansionsturbine 1 und Kompressor 3 an der Welle angeordneten Motor 2. Wiederum steht der Motor 2 mit einer Antriebseinheit 4 in Verbindung.

Im Unterschied zu den Anordnungen gemäß Figuren 1 und 2 umfasst der Prozessluftkreislauf in der Anordnung gemäß Figur 3 aber zwei Abschnitte, nämlich einen Niederdruckabschnitt 6a und einen Hochdruckabschnitt 6b. Der Niederdruckabschnitt 6a erstreckt sich ähnlich dem offenen Unterdruckkreislauf der Anordnungen gemäß Figur 1, in Strömungsrichtung der Prozessluft, von der Expansionsturbine 1 zum Kompressor 3 und durchläuft die kalte Seite eines Lastwärmetauschers 5 für eine Wärmeaufnahme aus dem Fahrgastraum. Die Klimaluftleitungen 9 und 10 führen wie auch in den Anordnungen gemäß Figur 1 die Luft des Fahrgastraums durch die warme Seite des Lastwärmetauschers 5. Allerdings umfasst der Prozessluftkreislauf der Figur 3 keine Prozesslufteintrittsleitungen und Prozessluftaustrittsleitungen 7 und 8 an der Expansionsturbine 1 und dem Kompressor 3. Stattdessen ist ein den Prozessluftkreislauf schließender Hochdruckabschnitt 6b vorgesehen, der sich in Strömungsrichtung der Prozessluft von der Druckseite des Kompressors 3 zur Expansionsturbine 1 erstreckt und diese beiden Bauteile verbindet. Im Hochdruckabschnitt 6b befindet sich ein Außenwärmetauscher 19, der einen Wärmetausch zwischen Prozessluft und Umgebungsluft 20 ermöglicht. Am Niederdruckabschnitt 6a ist ferner eine Zapfleitung 24 angeordnet, in der ein Vorkompressor 25 angeordnet ist.

Die Kaltluftklimaanlage der Figur 3 ist für den geschlossenen Überdruckbetrieb ausgelegt und in beiden Abschnitten 6a und 6b des Prozessluftkreislaufs herrscht im Betrieb ein Druck, der höher ist als der Umgebungsdruck, wobei der Druck im Hochdruckabschnitt 6b höher als im Niederdruckabschnitt 6a ist. Der Prozessluftkreislauf erstreckt sich über beide Abschnitte 6a und 6b und ist in sich geschlossen.

Im Betrieb wird Prozessluft zunächst durch den Vorkompressor 25 durch die Zapfleitung 24 angesaugt und auf ein erstes Druckniveau verdichtet, das dem Druckniveau im Niedrigdruckabschnitt 6a entspricht. Die so in den Niedrigdruckabschnitt 6a eingetretene Prozessluft wird dann vom Kompressor 3 angesaugt und auf ein zweites Druckniveau verdichtet, das dem Druckniveau im Hochdruckabschnitt 6b entspricht. Im Rahmen dieser beiden adiabatischen Verdichtungen erwärmt sich die Prozessluft stark. Nach der zweiten Verdichtung am Kompressor 3 erreicht die Prozessluft den Außenwärmetauscher 19, in dem sie durch eine Wärmeabgabe an die Umgebungsluft 20 abgekühlt wird. Die Umgebungsluft 20 ist stets kühler als die komprimierte Prozessluft, da sie das unkomprimierte Reservoir für die Prozessluft darstellt. In der Expansionsturbine 1, die über eine Welle mit dem Kompressor 3 verbunden ist, expandiert die Prozessluft wieder und der Druck fällt wieder auf das erste Druckniveau ab. Im Rahmen dieser adiabatischen Expansion fällt die Temperatur der schon im Außenwärmetauscher 19 gekühlten Prozessluft weiter ab, sodass die Temperatur der Prozessluft nach der Expansion niedriger ist als die Temperatur der Umgebungsluft 20 und der Luft des Fahrgastraums am Lastwärmetauscher 19 Wärme entziehen kann. Das im Rahmen der Drosselung der Expansion der Prozessluft an der Expansionsturbine 1 wirkende Drehmoment wird über die Welle an den Kompressor 3 weitergegeben, wodurch der Motor 2 in seinem Betrieb des Kompressors 3 unterstützt wird. Der Kompressor 3 wird also aktiv durch den Motor 2 und zusätzlich durch das Drehmoment der Expansionsturbine 1 betrieben. Die im Lastwärmetauscher 5 erwärmte Prozessluft wird dann im Niedrigdruckabschnitt 6a wieder zum Kompressor 3 geleitet, sodass sich ein geschlossener Kreislauf bildet. Der Vorkompressor 25 saugt bei Bedarf weitere Luft über die Zapfleitung 24 an.

Zur Feststellung etwaiger Undichtigkeiten im Prozessluftkreislauf 6a und 6b kann vorgesehen sein, dass in einer Kalibrationsroutine bei verschiedenen Bedingungen wie insbesondere Umgebungsdrücken für ein dichtes System und für definierte Undichtigkeiten (L) die relative Einschaltdauer (t_{REL}) des Vorkompressors 25 im Betrieb der Kaltluftklimaanlage gemessen wird, also die Häufigkeit und Dauer des Betriebs des Vorkompressors 25 bei laufendem Betrieb der Kaltluftklimaanlage. Die erhaltenen Kennlinien der relativen Einschaltdauer des Vorkompressors 25 in Abhängigkeit von dem Ausmaß der Undichtigkeit, also die Kennlinien für t_{REL}(L) bei unterschiedlichen Umgebungsdrücken werden in der Steuereinheit hinterlegt. Ferner kann vorgesehen sein, im Rahmen der Kalibrationsroutine entsprechende Daten für die Betriebszeit (t_{INIT}) des Vorkompressors 25 beim Auffüllen des Prozessluftkreislaufs 6a und 6b zu messen und die entsprechenden Kennlinien, also die Kennlinien für t_{INIT}(L) bei unterschiedlichen Umgebungsdrücken zu hinterlegen. Im Klimabetrieb kann nun die relative Einschaltdauer des Vorkompressors 25 bei gegebenen Bedingungen mit den hinterlegten entsprechenden Kennlinien verglichen werden. Bei Anlagenstart kann die anfängliche Einschaltdauer des Vorkompressors 25 bei gegebenen Bedingungen mit den hinterlegten entsprechenden Kennlinien verglichen werden. Sofern eine Abweichung festgestellt wird, kann auf eine Undichtigkeit im Prozessluftkreislauf 6a und 6b geschlossen werden. Anhand der Größe der Abweichung können Rückschlüsse auf das Ausmaß der Undichtigkeit gezogen werden. So kann bei jedem Anlagenstart und auch im Klimabetrieb eine Undichtigkeit detektiert werden.

Anhand der sowohl für die Kaltluftklimaanlagen der Figuren 1 und 2 als auch für die Kaltluftklimaanlage der Figur 3 vorgestellten Verfahren ist eine Erkennung von Undichtigkeiten im Prozessluftkreislauf 6, 6a und 6b im Klimabetrieb möglich. Die Verfahren können automatisch zu festgelegten Zeitpunkten oder nach Ablauf einer bestimmten Periode durchgeführt werden und gegebenenfalls eine Diagnosemeldung im Wartungssystem auslösen. Sie können auch manuell gestartet werden, beispielsweise von einem Lokführer oder Zugbegleiter im Fall eines Schienenfahrzeugs oder von einem Piloten oder Zugbegleiter im Fall eines Flugzeugs. So kann zu beliebigen Zeitpunkten auf einfache Weise bestimmt werden, ob Undichtigkeiten vorliegen, und wenn ja, ob eine sofortige Reparatur notwendig ist oder ob eine baldige Reparatur ausreicht, beispielsweise weil unter den aktuellen Bedingungen die Anforderungen an die Kühlleistung trotz Undichtigkeit erfüllt werden können.

## Patentansprüche

1. Verfahren zur Bestimmung der Dichtigkeit eines Prozessluftkreislaufs (6) einer Kaltluftklimaanlage, wobei die Kaltluftklimaanlage eine Kühlturbine mit einem Kompressor (3) und einer Expansionsturbine (1) aufweist, die im Prozessluftkreislauf (6) angeordnet ist, wobei ein Motor (2) zum Betrieb des Kompressors (3) vorgesehen ist, wobei Kompressor (3), Expansionsturbine (1) und Motor (2) über eine gemeinsame Welle verbunden sind, und wobei die Kaltluftklimaanlage im offenen Unterdruckbetrieb oder im offenen Überdruckbetrieb betrieben wird,
**dadurch gekennzeichnet,**
**dass** eine Kalibration durchgeführt wird, in der mehrere Kennlinien der Leistungsaufnahme des Motors (2) in Abhängigkeit der Drehzahl des Kompressors (3) unter verschiedenen Rahmenbedingungen, insbesondere unterschiedlichen Umgebungstemperaturen und Umgebungsdrücken, ermittelt werden, dass die ermittelten Kennlinien hinterlegt werden, und dass die hinterlegten Kennlinien in einem Prüflauf zur Feststellung der Dichtigkeit des Prozessluftkreislaufs (6) herangezogen werden, wobei im Prüflauf die momentane Leistungsaufnahme des Motors (2) bei gegebener Drehzahl des Kompressors (3) und gegebenen Rahmenbedingungen mit der zu den Rahmenbedingungen passenden Kennlinie verglichen wird.

2. Verfahren zur Bestimmung der Dichtigkeit eines Prozessluftkreislaufs (6) einer Kaltluftklimaanlage, wobei die Kaltluftklimaanlage eine Kühlturbine mit einem Kompressor (3) und einer Expansionsturbine (1) aufweist, die im Prozessluftkreislauf (6) angeordnet ist, wobei ein Motor (2) zum Betrieb des Kompressors (3) vorgesehen ist, wobei Kompressor (3), Expansionsturbine (1) und Motor (2) über eine gemeinsame Welle verbunden sind, und wobei die Kaltluftklimaanlage im offenen Unterdruckbetrieb oder im offenen Überdruckbetrieb betrieben wird,
**dadurch gekennzeichnet,**
**dass** eine Kalibration durchgeführt wird, in der mehrere Kennlinien des Massestroms durch den Kompressor (3) und mehrere Kennlinien des Massestroms durch die Expansionsturbine (1) in Abhängigkeit der Druckdifferenz zwischen der Umgebung und dem Prozessluftkreislauf ermittelt werden, vorzugsweise unter Vorlage unterschiedlicher Temperaturen als Rahmenbedingungen, dass die ermittelten Kennlinien hinterlegt werden, und dass die hinterlegten Kennlinien in einem Prüflauf zur Feststellung der Dichtigkeit des Prozessluftkreislaufs (6) herangezogen werden, wobei im Prüflauf die Masseströme durch den Kompressor (3) und die Expansionsturbine (1) bei gegebener Druckdifferenz zwischen der Umgebung und dem Prozessluftkreislauf und gegebenen Rahmenbedingungen ermittelt und miteinander verglichen werden.

3. Verfahren zur Bestimmung der Dichtigkeit eines Prozessluftkreislaufs (6) einer Kaltluftklimaanlage, wobei die Kaltluftklimaanlage eine Kühlturbine mit einem Kompressor (3) und einer Expansionsturbine (1) aufweist, die im Prozessluftkreislauf (6) angeordnet ist, wobei ein Motor (2) zum Betrieb des Kompressors (3) vorgesehen ist, wobei Kompressor (3), Expansionsturbine (1) und Motor (2) über eine gemeinsame Welle verbunden sind, und wobei die Kaltluftklimaanlage im geschlossenen Überdruckbetrieb betrieben wird und eine Zapfleitung (24) mit einem Vorkompressor (25) aufweist,
**dadurch gekennzeichnet,**
**dass** eine Kalibration durchgeführt wird, in der mehrere Kennlinien für die relative Einschaltdauer des Vorkompressors (25) oder die Betriebszeit des Vorkompressors (25) beim Füllen des Prozessluftkreislaufs in Abhängigkeit bekannter Undichtigkeiten ermittelt werden, vorzugsweise mit unterschiedlichen Umgebungsdrücken als Rahmenbedingungen, dass die ermittelten Kennlinien hinterlegt werden, und dass die hinterlegten Kennlinien in einem Prüflauf zur Feststellung der Dichtigkeit des Prozessluftkreislaufs (6) herangezogen werden, wobei im Prüflauf die relative Einschaltdauer des Vorkompressors (25) oder die Betriebszeit des Vorkompressors (25) beim Füllen des Prozessluftkreislaufs (6) bei gegebenen Rahmenbedingungen mit dem zu den Rahmenbedingungen passenden hinterlegten Wert verglichen wird.

4. System umfassend eine Kaltluftklimaanlage sowie eine damit in Verbindung stehende Steuereinheit, wobei die Kaltluftklimaanlage eine Kühlturbine mit einem Kompressor und einer Expansionsturbine aufweist, die im Prozessluftkreislauf angeordnet ist, wobei ein Motor zum Betrieb des Kompressors (3) vorgesehen ist, wobei Kompressor (3), Expansionsturbine (1) und Motor (2) über eine gemeinsame Welle verbunden sind und wobei die Kaltluftklimaanlage für den offenen Unterdruckbetrieb oder den offenen Überdruckbetrieb ausgelegt ist,
**dadurch gekennzeichnet,**
**dass** das System Mittel zur Bestimmung der Leistungsaufnahme des Motors (2) und der Drehzahl des Kompressors (3) sowie Mittel zur Erfassung von Rahmenbedingungen, insbesondere von Umgebungstemperaturen und Umgebungsdrücken aufweist, und dass die Steuereinheit ausgebildet ist, ein Verfahren nach Anspruch 1 auszuführen.

5. System umfassend eine Kaltluftklimaanlage sowie eine damit in Verbindung stehende Steuereinheit, wobei die Kaltluftklimaanlage eine Kühlturbine mit einem Kompressor und einer Expansionsturbine aufweist, die im Prozessluftkreislauf angeordnet ist, wobei ein Motor zum Betrieb des Kompressors (3) vorgesehen ist, wobei Kompressor (3), Expansionsturbine (1) und Motor (2) über eine gemeinsame Welle verbunden sind und wobei die Kaltluftklimaanlage für den offenen Unterdruckbetrieb oder den offenen Überdruckbetrieb,
**dadurch gekennzeichnet,**
**dass** das System Mittel zur Bestimmung der Masseströme durch den Kompressor (3) und die Expansionsturbine (1), Mittel zur Bestimmung der Druckdifferenz zwischen der Umgebung und dem Prozessluftkreislauf sowie Mittel zur Erfassung von Rahmenbedingungen, insbesondere von Temperaturen aufweist, und dass die Steuereinheit ausgebildet ist, ein Verfahren nach Anspruch 2 auszuführen.

6. System umfassend eine Kaltluftklimaanlage sowie eine damit in Verbindung stehende Steuereinheit, wobei die Kaltluftklimaanlage eine Kühlturbine mit einem Kompressor und einer Expansionsturbine aufweist, die im Prozessluftkreislauf angeordnet ist, wobei ein Motor zum Betrieb des Kompressors (3) vorgesehen ist, wobei Kompressor (3), Expansionsturbine (1) und Motor (2) über eine gemeinsame Welle verbunden sind und wobei die Kaltluftklimaanlage für den geschlossenen Überdruckbetrieb ausgelegt ist und eine Zapfleitung (24) mit einem Vorkompressor (25) aufweist,
**dadurch gekennzeichnet,**
**dass** das System Mittel zur Bestimmung der relativen Einschaltdauer oder der Betriebszeit des Vorkompressors (25) sowie Mittel zur Erfassung von Rahmenbedingungen, insbesondere von Umgebungsdrücken aufweist, und dass die Steuereinheit ausgebildet ist, ein Verfahren nach Anspruch 3 auszuführen.

7. Fahrzeug mit einem System nach Anspruch 4, 5 oder 6.

## Claims

1. A method of determining the leak tightness of a process air circuit (6) of a cold air conditioning system, wherein the cold air conditioning system has a cooling turbine having a compressor (3) and an expansion turbine (1) that is arranged in the process air circuit (6), wherein a motor (2) for operating the compressor (3) is provided, wherein the compressor (3), the expansion turbine (1) and the motor (2) are connected via a common shaft, and wherein the cold air conditioning system is operated in open low pressure operation or in open excess pressure operation,
**characterized in that**
a calibration is carried out in which characteristics of the power consumption of the motor (2) are determined in dependence on the speed of the compressor (3) under different framework conditions, in particular different ambient temperatures and ambient pressures; **in that** the determined characteristics are stored; and **in that** the stored characteristics are used in a test run to determine the leak tightness of the process air circuit (6), with the instantaneous power consumption of the motor (2) at a given speed of the compressor (3) and under given framework conditions being compared with the characteristic matching the framework conditions in a test run.

2. A method of determining the leak tightness of a process air circuit (6) of a cold air conditioning system, wherein the cold air conditioning system has a cooling turbine having a compressor (3) and an expansion turbine (1) that is arranged in the process air circuit (6), wherein a motor (2) for operating the compressor (3) is provided, wherein the compressor (3), the expansion turbine (1) and the motor (2) are connected via a common shaft, and wherein the cold air conditioning system is operated in open low pressure operation or in open excess pressure operation,
**characterized in that**
a calibration is carried out in which a plurality of characteristics of the mass flow through the compressor (3) is determined and a plurality of characteristics of the mass flow through the expansion turbine (1) is determined in dependence on the pressure difference between the environment and the process air circuit, preferably in the presence of different temperatures as framework conditions; **in that** the determined characteristics are stored; and **in that** the determined characteristics are used in a test run to determine the leak tightness of the process air circuit (6), with the mass flows through the compressor (3) and the expansion turbine (1) at a given pressure difference between the environment and the process air circuit and under given framework conditions being determined in a test run and being compared with one another.

3. A method of determining the leak tightness of a process air circuit (6) of a cold air conditioning system, wherein the cold air conditioning system has a cooling turbine having a compressor (3) and an expansion turbine (1) that is arranged in the process air circuit (6), wherein a motor (2) for operating the compressor (3) is provided, wherein the compressor (3), the expansion turbine (1), and the motor (2) are connected via a common shaft, and wherein the cold air conditioning system is operated in closed excess pressure operation and has a tap line (24) having a precompressor (25),
**characterized in that**
a calibration is carried out in which a plurality of characteristics for the relative switch-on duration of the precompressor (25) or the operating time of the precompressor (25) are determined during the filling of the process air circuit in dependence on known leak values, preferably using different ambient pressures as framework conditions; **in that** the determined characteristics are stored; and **in that** the stored characteristics are used in a test run to determine the leak tightness of the process air circuit (6), with the relative switch-on duration of the precompressor (25) or the operating time of the precompressor (25) during the filling of the process air circuit (6) under given framework conditions being compared with the stored value matching the framework conditions in the test run.

4. A system comprising a cold air conditioning system and a control unit connected thereto, wherein the cold air conditioning system has a cooling turbine having a compressor and an expansion turbine that is arranged in the process air circuit, wherein a motor is provided to operate the compressor (3), wherein the compressor (3), the expansion turbine (1), and the motor (2) are connected via a common shaft, and wherein the cold air conditioning system is adapted for open low pressure operation or open excess pressure operation,
**characterized in that**
the system has means for determining the power consumption of the motor (2) and the speed of the compressor (3) and has means for detecting framework conditions, in particular ambient temperatures and ambient pressures; and **in that** the control unit is configured to carry out a method in accordance with claim 1.

5. A system comprising a cold air conditioning system and a control unit connected thereto, wherein the cold air conditioning system has a cooling turbine having a compressor and an expansion turbine that is arranged in the process air circuit, wherein a motor is provided to operate the compressor (3), wherein the compressor (3), the expansion turbine (1), and the motor (2) are connected via a common shaft, and wherein the cold air conditioning system is adapted for open low pressure operation or for open excess pressure operation,
**characterized in that**
the system has means for determining the mass flows through the compressor (3) and the expansion turbine (1), means for determining the pressure difference between the environment and the process air circuit, and means for detecting framework conditions, in particular temperatures; and **in that** the control unit is configured to carry out a method in accordance with claim 2.

6. A system comprising a cold air conditioning system and a control unit connected thereto, wherein the cold air conditioning system has a cooling turbine having a compressor and an expansion turbine that is arranged in the process air circuit, wherein a motor is provided to operate the compressor (3), wherein the compressor (3), the expansion turbine (1) and the motor (2) are connected via a common shaft, and wherein the cold air conditioning system is adapted for closed excess air operation and has a tap line (24) having a precompressor (25),
**characterized in that**
the system has means for determining the relative switch-on time or the operating time of the precompressor (25), and means for detecting framework conditions, in particular ambient pressures; and **in that** the control unit is configured to carry out a method in accordance with claim 3.

7. A vehicle having a system in accordance with claim 4, claim 5, or claim 6.

## Revendications

1. Procédé de détermination de l'étanchéité d'un circuit d'air de processus (6) d'une installation de climatisation à air froid, l'installation de climatisation à air froid comportant un groupe turbo-refroidisseur doté d'un compresseur (3) et d'une turbine de détente (1) et disposé dans le circuit d'air de processus (6), un moteur (2) étant prévu pour faire fonctionner le compresseur (3), le compresseur (3), la turbine de détente (1) et le moteur (2) étant reliés par le biais d'un arbre commun, et l'installation de climatisation à air froid étant exploitée en fonctionnement ouvert en dépression ou en fonctionnement ouvert en surpression,
**caractérisé en ce que**
un étalonnage est effectué, dans lequel plusieurs courbes caractéristiques de la puissance absorbée du moteur (2) sont déterminées en fonction de la vitesse de rotation du compresseur (3) dans différentes conditions cadres, en particulier différentes températures ambiantes et pressions ambiantes, **en ce que** les courbes caractéristiques déterminées sont enregistrées, et **en ce que** les courbes caractéristiques enregistrées sont utilisées dans une marche de test pour constater l'étanchéité du circuit d'air de processus (6), dans lequel, lors de la marche de test, la puissance absorbée actuelle du moteur (2), à une vitesse de rotation donnée du compresseur (3) et dans des conditions cadres données, est comparée avec la courbe caractéristique correspondant aux conditions cadres.

2. Procédé de détermination de l'étanchéité d'un circuit d'air de processus (6) d'une installation de climatisation à air froid, l'installation de climatisation à air froid comportant un groupe turbo-refroidisseur doté d'un compresseur (3) et d'une turbine de détente (1) et disposé dans le circuit d'air de processus (6), un moteur (2) étant prévu pour faire fonctionner le compresseur (3), le compresseur (3), la turbine de détente (1) et le moteur (2) étant reliés par le biais d'un arbre commun, et l'installation de climatisation à air froid étant exploitée en fonctionnement ouvert en dépression ou en fonctionnement ouvert en surpression,
**caractérisé en ce que**
un étalonnage est effectué, dans lequel plusieurs courbes caractéristiques du débit massique à travers le compresseur (3) et plusieurs courbes caractéristiques du débit massique à travers la turbine de détente (1) sont déterminées en fonction de la différence de pression entre le milieu ambiant et le circuit d'air de processus, de préférence avec différentes températures comme conditions cadres, **en ce que** les courbes caractéristiques déterminées sont enregistrées, et **en ce que** les courbes caractéristiques enregistrées sont utilisées dans une marche de test pour constater l'étanchéité du circuit d'air de processus (6), dans lequel, lors de la marche de test, les débits massiques à travers le compresseur (3) et la turbine de détente (1), à une différence de pression donnée entre le milieu ambiant et le circuit d'air de processus et dans des conditions cadres données, sont déterminés et comparés entre eux.

3. Procédé de détermination de l'étanchéité d'un circuit d'air de processus (6) d'une installation de climatisation à air froid, l'installation de climatisation à air froid comportant un groupe turbo-refroidisseur doté d'un compresseur (3) et d'une turbine de détente (1) et disposé dans le circuit d'air de processus (6), un moteur (2) étant prévu pour faire fonctionner le compresseur (3), le compresseur (3), la turbine de détente (1) et le moteur (2) étant reliés par le biais d'un arbre commun, et l'installation de climatisation à air froid étant exploitée en fonctionnement fermé en surpression et comportant une conduite de distribution (24) comprenant un précompresseur (25),
**caractérisé en ce que**
un étalonnage est effectué, dans lequel plusieurs courbes caractéristiques pour le facteur de service du précompresseur (25) ou le temps de fonctionnement du précompresseur (25) lors du remplissage du circuit d'air de processus sont déterminées en fonction de défauts d'étanchéité connus, de préférence avec différentes pressions ambiantes comme conditions cadres, **en ce que** les courbes caractéristiques déterminées sont enregistrées et **en ce que** les courbes caractéristiques enregistrées sont utilisées dans une marche de test pour constater l'étanchéité du circuit d'air de processus (6), dans lequel, lors de la marche de test, le facteur de service du précompresseur (25) ou le temps de fonctionnement du précompresseur (25) lors du remplissage du circuit d'air de processus (6) dans des conditions cadres données sont comparés avec la valeur enregistrée correspondant aux conditions cadres.

4. Système comprenant une installation de climatisation à air froid ainsi qu'une unité de commande en liaison avec celle-ci, l'installation de climatisation à air froid comportant un groupe turbo-refroidisseur doté d'un compresseur et d'une turbine de détente et disposé dans le circuit d'air de processus, un moteur étant prévu pour faire fonctionner le compresseur (3), le compresseur (3), la turbine de détente (1) et le moteur (2) étant reliés par le biais d'un arbre commun, et l'installation de climatisation à air froid étant conçue pour le fonctionnement ouvert en dépression ou le fonctionnement ouvert en surpression,
**caractérisé en ce que**
le système comporte des moyens de détermination de la puissance absorbée du moteur (2) et de la vitesse de rotation du compresseur (3) ainsi que des moyens de détection de conditions cadres, en particulier de températures ambiantes et de pressions ambiantes, et **en ce que** l'unité de commande est conçue pour exécuter un procédé selon la revendication 1.

5. Système comprenant une installation de climatisation à air froid ainsi qu'une unité de commande en liaison avec celle-ci, l'installation de climatisation à air froid comportant un groupe turbo-refroidisseur doté d'un compresseur et d'une turbine de détente et disposé dans le circuit d'air de processus, un moteur étant prévu pour faire fonctionner le compresseur (3), le compresseur (3), la turbine de détente (1) et le moteur (2) étant reliés par le biais d'un arbre commun, et l'installation de climatisation à air froid étant conçue pour le fonctionnement ouvert en dépression ou le fonctionnement ouvert en surpression,
**caractérisé en ce que**
le système comporte des moyens de détermination des débits massiques à travers le compresseur (3) et la turbine de détente (1), des moyens de détermination de la différence de pression entre le milieu ambiant et le circuit d'air de processus ainsi que des moyens de détection de conditions cadres, en particulier de températures, et **en ce que** l'unité de commande est conçue pour exécuter un procédé selon la revendication 2.

6. Système comprenant une installation de climatisation à air froid ainsi qu'une unité de commande en liaison avec celle-ci, l'installation de climatisation à air froid comportant un groupe turbo-refroidisseur doté d'un compresseur et d'une turbine de détente et disposé dans le circuit d'air de processus, un moteur étant prévu pour faire fonctionner le compresseur (3), le compresseur (3), la turbine de détente (1) et le moteur (2) étant reliés par le biais d'un arbre commun, et l'installation de climatisation à air froid étant conçue pour le fonctionnement fermé en surpression et comportant une conduite de distribution (24) comprenant un précompresseur (25),
**caractérisé en ce que**
le système comporte des moyens de détermination du facteur de service ou du temps de fonctionnement du précompresseur (25) ainsi que des moyens de détection de conditions cadres, en particulier de pressions ambiantes, et **en ce que** l'unité de commande est conçue pour exécuter un procédé selon la revendication 3.

7. Véhicule comprenant un système selon la revendication 4, 5, ou 6.
